(19) Europäisches Patentamt
European Patent Office
Office européen des brevets

(11) **EP 2 442 478 A1**

(12) **EUROPEAN PATENT APPLICATION**
published in accordance with Art. 153(4) EPC

(43) Date of publication:
**18.04.2012 Bulletin 2012/16**

(51) Int Cl.:
***H04L 7/00*** (2006.01)

(21) Application number: **10799398.2**

(22) Date of filing: **27.05.2010**

(86) International application number:
**PCT/CN2010/073302**

(87) International publication number:
**WO 2011/006400 (20.01.2011 Gazette 2011/03)**

(84) Designated Contracting States:
**AL AT BE BG CH CY CZ DE DK EE ES FI FR GB
GR HR HU IE IS IT LI LT LU LV MC MK MT NL NO
PL PT RO SE SI SK SM TR**

(30) Priority: **17.07.2009 CN 200910157935**

(71) Applicant: **ZTE Corporation
Shenzhen, Guangdong 518057 (CN)**

(72) Inventor: **CHEN, Shihai
Shenzhen
Guangdong 518057 (CN)**

(74) Representative: **Sander Jakobsson, Sofia Ellinor
Awapatent AB
Junkersgatan 1
582 35 Linköping (SE)**

(54) **METHOD AND APPARATUS FOR IMPLEMENTING LONG-DISTANCE RANGING DETECTION**

(57) The invention provides a method and an apparatus for implementing long-distance ranging detection, the method including: a base station receiving two continuous OFDM (orthogonal frequency division multiplexing) signals of a mobile station, eliminating prefixes of the two OFDM signals respectively to obtain a first OFDM symbol and a second OFDM symbol; performing a fast Fourier transform respectively for the first OFDM symbol and the second OFDM symbol to obtain a first OFDM symbol carrier sequence and a second OFDM symbol carrier sequence; performing an operation on the second OFDM symbol carrier sequence and detecting whether a ranging symbol is included in the second OFDM symbol, if yes, performing an operation on the first OFDM symbol carrier sequence to eliminate phase ambiguity, or else, ending the ranging detection. The invention eliminates the phase ambiguity in the meantime of implementing the long-distance detection; and, the calculation complexity is reduced since the calculation for the first OFDM symbol is based on the detecting result of the second OFDM symbol.

FIG.2

**Description**

Field of the Invention

The present invention relates to the field of communication technology, and especially to a method and an apparatus for implementing long-distance ranging detection.

Background of the Invention

The OFDM (Orthogonal Frequency Division Multiplexing) is a technology for multi-carrier transmission. In recent years, OFDM has been widely used, especially in the mobile communication field. OFDM has been thought to be a key technology having a good developing prospect, and OFDM technology has become one of physical layer technologies of IEEE802.16 protocol.

In the OFDM system of IEEE802.16e protocol, the uplink synchronization between mobile stations and base stations is completed by the ranging detection. The current methods for ranging detection are mainly directed to the detection of a single ranging symbol, but the detection method for a single ranging symbol cannot meet the requirement for long-distance access of the mobile station, and a base station can not detect the ranging symbol of a mobile station when the signal delay of the mobile station is over than the time length of an OFDM symbol.

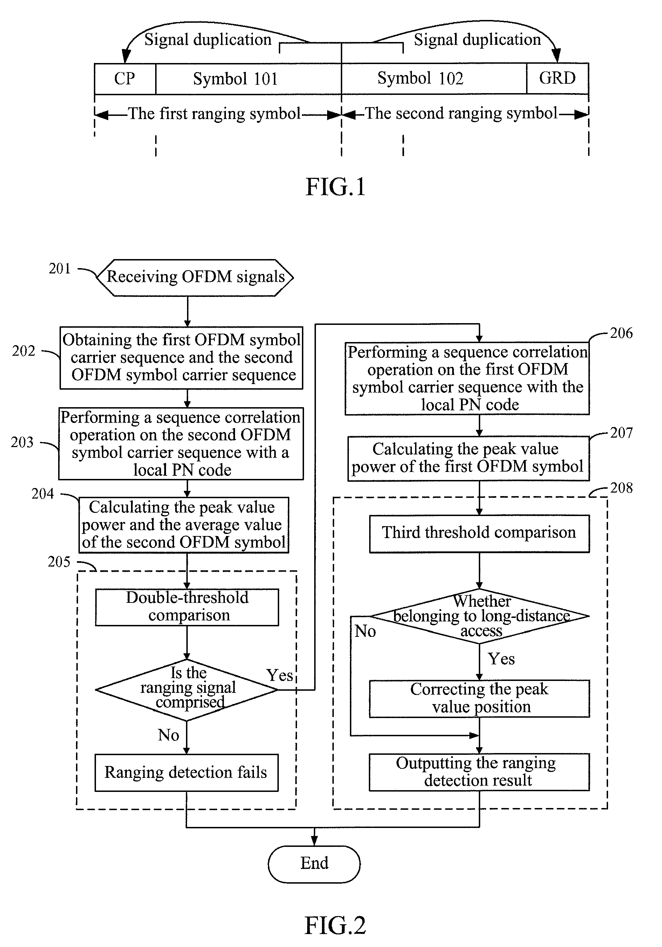

The IEEE802.16e protocol provides a method for increasing detection distance, which requires the mobile station to transmit two identical ranging symbols through a channel to the base station, which detects the ranging symbol according to the received OFDM signals. FIG.1 is a diagram of the two continuous ranging symbols described by the IEEE802.16 protocol. As shown in FIG.1, symbol 101 and symbol 102 are identical ranging symbols, after the processing of which the two continuous ranging symbols shown in FIG.1 are obtained. The specific processing process comprises: duplicating the rear part of symbol 101 to be a CP (cyclic prefix) to obtain the first ranging symbol, and duplicating the front part of symbol 102 to be a GRG to obtain the second ranging symbol.

For the method provide by the IEEE802.16e protocol, it can not be distinguished which ranging symbol the received symbol is if the base station detects only a single symbol, thus causing phase ambiguity; if two symbols are detected simultaneously, the problem of phase ambiguity may be eliminated, however, in this way, not only implementation cost of the system is high, but also the response time of the system is influenced.

Summary of the Invention

In view of the above analysis, the invention is intended to provide a method and an apparatus for implementing long-distance ranging detection to solve the problem of the phase ambiguity brought by the ranging detection method in the existing technologies.

The destination of the invention is mainly realized by the following technical schemes:

the invention provides a method for implementing long-distance ranging detection, wherein, the method comprises:

step A, a base station receiving two continuous OFDM (orthogonal frequency division multiplexing) signals of a mobile station, eliminating prefixes of the two OFDM signals respectively to obtain a first OFDM symbol and a second OFDM symbol; performing a fast Fourier transform respectively for the first OFDM symbol and the second OFDM symbol to obtain a first OFDM symbol carrier sequence and a second OFDM symbol carrier sequence;

step B, performing an operation on the second OFDM symbol carrier sequence and detecting whether a ranging symbol is comprised in the second OFDM symbol, if yes, proceeding to step C, or else, ending the ranging detection;

step C, performing an operation on the first OFDM symbol carrier sequence to eliminate phase ambiguity.

The step B comprises specifically:

step B1: performing a sequence correlation operation on the second OFDM symbol carrier sequence with a local pseudo-random code (PN code) of the base station to obtain a second correlated sequence, and then performing an inverse fast Fourier transform on the second correlated sequence;

step B2: performing a calculation for an average power and a peak value power on a sequence after the inverse fast Fourier transform to obtain an average power, a peak value power and a peak value position of the second OFDM symbol;

step B3: comparing a ratio of the peak value power of the second OFDM symbol to the average power of the second OFDM symbol with a first threshold, and meanwhile comparing the average power of the second OFDM symbol with a second threshold, if both are greater than the thresholds respectively, then deciding that a ranging symbol is comprised in the second OFDM symbol; wherein, the first threshold is a threshold for the ratio of the peak value power of the second OFDM symbol to the average power of the second OFDM symbol, and the second threshold is a threshold for the average power of the second OFDM symbol.

The step B2 comprises specifically:

for the sequence after the inverse fast Fourier transform, calculating a power of each signal sample point of the sequence, searching powers of a plurality of signal sample points for the peak value power and the peak value position of the second OFDM symbol, and meanwhile averaging the powers of a plurality of signal sample points to obtain the average power.

The step C comprises:

step C1: performing a sequence correlation operation on the first OFDM symbol carrier sequence with a local PN code of the base station to obtain a first correlated sequence;

step C2: performing a calculation according to the peak value position of the second OFDM symbol and the first correlated sequence to obtain a peak value power of the first OFDM symbol;

step C3: judging whether a ratio of the peak value power of the second OFDM symbol to the peak value power of the first OFDM symbol is over than a third threshold, if yes, deciding that a distance from the mobile station to the base station is over than an OFDM symbol time, correcting the peak value position of the second OFDM symbol and outputting, or else, outputting directly the peak value position of the second OFDM symbol; wherein, the third threshold is a threshold of the ratio of the peak value power of the second OFDM symbol to the peak value power of the first OFDM symbol.

The step C2 comprises specifically:

calculating a phase rotation sequence according to the peak value position of the second OFDM symbol, and adjusting a phase of the first correlated sequence;

calculating an accumulated value of products of the phase rotation sequence and the first correlated sequence, wherein, a power of the accumulated value is the peak value power of the first OFDM symbol; or,

the step C2 comprises specifically:

performing an inverse Fourier transform on the first correlated sequence, and performing a calculation on the sequence obtained after the inverse Fourier transform and the peak value position of the second OFDM symbol to obtain the peak value power of the first OFDM symbol.

The invention also provides an apparatus for implementing long-distance ranging detection, wherein, the apparatus comprises: a signal processing unit, a first symbol detecting unit and a second symbol detecting unit; wherein, the signal processing unit is configured to receive a first OFDM (orthogonal frequency division multiplexing) signal and a second OFDM signal of a mobile station, and performing a fast Fourier transform in a symbol length to obtain a first OFDM symbol carrier sequence and a second OFDM symbol carrier sequence;
the second symbol detecting unit is configured to perform an operation on the second OFDM symbol carrier sequence and detect whether a ranging symbol is comprised in a second OFDM symbol, if yes, triggering the first symbol detecting unit, or else, ending the ranging detection;
the first symbol detecting unit is configured to perform a calculation on a first OFDM symbol to eliminate phase ambiguity.
The signal processing unit comprises specifically: a receiving module, a Flourier transform module and a data caching module; wherein,
the receiving module is configured to receive the first OFDM signal and the second OFDM signal of the mobile station, and eliminate respectively a cyclic prefix of the first OFDM signal and a cyclic prefix of the second OFDM signal to obtain the first OFDM symbol and the second OFDM symbol;

the Flourier transform module is configured to perform respectively a Flourier transform on the first OFDM symbol and the second OFDM symbol to obtain the first OFDM symbol carrier sequence and the second OFDM symbol carrier sequence, and output the first OFDM symbol carrier sequence and the second OFDM symbol carrier sequence to the data caching module;

the data caching module is configured to cache the first OFDM symbol carrier sequence and the second OFDM symbol carrier sequence.

The second symbol detecting unit comprises specifically: a second PN code correlation module, an inverse Flourier transform module, a peak value and average value calculating module and a detection deciding module; wherein,

the second PN code correlation module is configured to performing a sequence correlation operation on the second symbol carrier sequence with a local pseudo-random code (PN code) of the base station to obtain a second correlated sequence;

the inverse Flourier transform module is configured to perform an inverse fast Fourier transform on the second correlated sequence and output;

the peak value and average value calculating module is configured to perform a calculation for an average power and a peak value power on a sequence output by the inverse Flourier transform module to obtain an average power, a peak value power and a peak value position of the second OFDM symbol;

the detection deciding module is configured to compare a ratio of the peak value power of the second OFDM symbol to the average power of the second OFDM symbol with a first threshold, and meanwhile compare the average power of the second OFDM symbol with a second threshold, if both are greater than the thresholds respectively, then decide that a ranging symbol is comprised in the second OFDM symbol, and trigger the first symbol detecting unit, or else, end the ranging detection; wherein, the first threshold is a threshold for the ratio of the peak value power of the second OFDM symbol to the average power of the second OFDM symbol, and the second threshold is a threshold for the average power of the second OFDM symbol.

The first symbol detecting unit comprises specifically: a first PN code correlation module, a peak value calculating module, a third threshold comparing module and a peak value position correcting module; wherein,

the first PN code correlation module is configured to perform a sequence correlation operation on the second symbol carrier sequence with a local PN code of the base station to obtain a first correlated sequence;

the peak value calculating module is configured to perform a calculation according to the peak value position of the second OFDM symbol and the first correlated sequence to obtain a peak value power of the first OFDM symbol;

the third threshold comparing module is configured to judge whether a ratio of the peak value power of the second OFDM symbol to the peak value power of the first OFDM symbol is over than a third threshold, if yes, decide that a distance from the mobile station to the base station is over than an OFDM symbol time, and trigger the peak value position correcting module to perform a peak value correction, or else trigger the peak value position correcting module to output directly; wherein, the third threshold is a threshold of the ratio of the peak value power of the second OFDM symbol to the peak value power of the first OFDM symbol;

the peak value position correcting module is configured to correct and output the peak value position of the second OFDM symbol, or output directly the peak value position of the second OFDM symbol.

The peak value calculating module is specifically configured to calculate a phase rotation sequence according to the peak value position of the second OFDM symbol, and adjust a phase of the first correlated sequence; and then calculate an accumulated value of products of the phase rotation sequence and the first correlated sequence, wherein, a power of the accumulated value is the peak value power of the first OFDM symbol;

or, the peak value calculating module is specifically configured to perform an inverse Fourier transform on the first correlated sequence, and perform a calculation on the sequence obtained after the inverse Fourier transform and the peak value position of the second OFDM symbol to obtain the peak value power of the first OFDM symbol.

The invention has the following advantages:

The invention eliminates the problem of phase ambiguity at the meantime of implementing the long-distance detection. And, the calculation complexity is reduced since the calculation for the first OFDM symbol is based on the detecting result of the second OFDM symbol.

Other characteristics and advantages of the invention will be described in the following specification, and part of them becomes obvious from the specification or is acknowledged by implementing the invention. The destination and other advantages of the invention can be realized and obtained through the described specification, claims and the structures specially designated in the drawings.

Brief Description of Drawings

FIG.1 is a diagram of two continuous ranging symbols described by the IEEE802.16e protocol;

FIG.2 is a flowchart of an embodiment of the method for implementing long-distance ranging detection in the invention;

FIG.3 is a block diagram of an embodiment of the apparatus for implementing long-distance ranging detection in the invention;

FIG.4 is an effect contrast diagram when double symbol detection is carried out using the invention.

Detailed Description of the Embodiments

The preferred embodiments of the invention will be described below with reference to the drawings, wherein, the drawings constitute part of the application and are used to illustrate the principle of the invention along with the embodiments in the invention. For clarity and simplicity, the detailed and specific illustrations of known functions and structures of the devices described herein will be omitted if they may make the theme of the invention obscure.

The method and apparatus described in the embodiments of the invention will be illustrated below in detail with reference to the drawings.

The method in one embodiment of the invention will be firstly illustrated in detail with reference to FIG.2. As shown in FIG.2, the method in the invention comprises specifically the following steps:

step 201: when a mobile station transmits two continuous ranging symbols through the channel, a base station receiving the two continuous OFDM signals of the mobile station, i.e. the first OFDM signal and the second OFDM signal, and eliminating prefixes of the two OFDM signals respectively to obtain the first OFDM symbol $R_1$ and the second OFDM symbol $R_2$.

step 202: performing a fast Fourier transform (FFT) respectively for the first OFDM symbol $R_1$ and the second OFDM symbol $R_2$ to obtain the first OFDM symbol carrier sequence $S_1(n)$ and the second OFDM symbol carrier sequence $S_2(n)$. Specifically, they can be represented respectively by the equation (1) and equation (2):

$$S_1(n) = \sum_{k=0}^{k=N-1} R_1(k)e^{-j2\pi nk/N} \qquad (1)$$

$$S_2(n) = \sum_{k=0}^{k=N-1} R_2(k)e^{-j2\pi nk/N} \qquad (2)$$

Wherein, N represents the number of the sample points of the OFDM symbol, n and k both represent the sample point, $n \in [0 \sim 1023]$, $k \in [0 \sim 1023]$.

step 203: performing a sequence correlation operation (herein, the sequence correlation operation is a mathematical operation, which may be usually thought to be the inner product of two signals in a signal space) on the second OFDM symbol carrier sequence $S_2(n)$ with a local pseudo-random code (PN code) $P(n)$ of the base station to obtain the second correlated sequence, and then performing an inverse fast Fourier transform (IFFT) on the second correlated sequence to obtain the sequence $M_2(k)$. It is specifically shown in equation (3):

$$M_2(k) = \frac{1}{N} \sum_{n=0}^{n=N-1} S_2(n)P(n)e^{j2\pi nk/N} \qquad (3)$$

step 204: calculating the power of each signal sample point of the sequence $M_2(k)$, and searching for the peak value power $Peak_2$ and the peak value position $Pos_2$ of $M_2(k)$, and meanwhile calculating the average power value $Mean_2$ of the $M_2(k)$. It is specifically shown in equation (4):

$$Peak_2 = \max\left(\left\|M_2(k)\right\|\right)$$

$$Mean_2 = \frac{1}{N}\sum_{n=0}^{n=N-1}\left|M_2(k)\right| \qquad (4)$$

$$Pos_2 = k, if \left|M_2(k)\right| = Peak_2$$

step 205: comparing a ratio of the peak value power $Peak_2$ to the average power $Mean_2$ with the first threshold $Threshold_1$, and meanwhile comparing the average power $Mean_2$ with the second threshold $Threshold_2$, if both are greater than the thresholds respectively, then deciding that a ranging symbol is comprised in the second OFDM symbol $R_2$, and proceeding to step 206; if there is no ranging symbol comprised in the second OFDM symbol $R_2$, which indicates failure of the ranging detection, ending the flow. Specifically, the ranging detection condition is as shown in equation (5):

$$\begin{cases} Peak_2 \,/\, Mean_2 > Threshold_1 \\ \quad Mean_2 > Threshold_2 \end{cases} \qquad (5)$$

Wherein, the first threshold $Threshold_1$ is the threshold for the ratio of the peak value power of the second OFDM symbol to the average power of the second OFDM symbol. The apparatus for implementing long-distance ranging detection in the invention can be set in a wireless circumstance to receive noise signals and ranging signals, and the ratio of the peak value power $Peak_2$ to the average power $Mean_2$ is calculated for several times to select a reasonable value as the first threshold. Because the peak value power is surely bigger than the average power, the first threshold is a value bigger than 1. The worse the quality of signals is, the smaller the ratio of the peak value power to the average power is, so the first threshold can not be configured to be too big; on the other hand, since various interferences exist in the wireless communication, the first threshold can not be configured to be too small in order to prevent the influence of the interferences.

The second threshold $Threshold_2$ is the threshold for the average power of the second OFDM symbol. The apparatus for implementing long-distance ranging detection in the invention can be set in a wireless circumstance to receive noise signals and ranging signals, and then the average power $Mean_2$ is calculated for several times to select a reasonable value as the second threshold.

Generally speaking, if the power of the received ranging signal is too small, the signal is thought to be an invalid signal.

step 206: calculating the first correlated sequence $C_1(n)$ of the first OFDM symbol carrier sequence $S_1(n)$ and the local PN code P(n) of the base station. It is specifically shown in equation (6):

$$C_1(n) = S_1(n)P(n) \qquad (6)$$

step 207: calculating the peak value power $Peak_1$ of the first OFDM symbol, which may have specifically two implementation schemes.

Scheme one: calculating a phase rotation sequence r(n) according to the peak value position $Pos_2$ of the second OFDM symbol, and then adjusting the phase of the first correlated sequence $C_1(n)$; then calculating the accumulated value of products of the r(n) and the $C_1(n)$, wherein, the power of the accumulated value is the peak value power $Peak_1$ of the first OFDM symbol. It is specifically shown in equation (7):

$$r(n) = \exp\left(j2\pi \cdot n \times Pos_2 \,/\, N\right)$$

$$Peak_1 = \left|\sum r(n)C_1(n)\right| \qquad (7)$$

Scheme two: performing an IFFT transformation on $C_1(n)$ to obtain the sequence $M_1(k)$, then calculating the

power of $M_1(Pos_2)$ according to the peak value position $Pos_2$ of the second OFDM symbol to obtain the peak value power $Peak_1$ of the first OFDM symbol. It is specifically shown in equation (8):

$$M_1(k) = \frac{1}{N} \sum_{n=0}^{n=N-1} C_1(n) e^{j2\pi nk/N}$$
$$Peak_1 = |M_1(Pos_2)|$$

(8)

step 208: judging whether the ratio of the peak value power $Peak_2$ of the second OFDM symbol to the peak value power $Peak_1$ of the first OFDM symbol is over than the third threshold $Threshold_3$, if yes, deciding that the distance from the mobile station to the base station is over than an OFDM symbol time, correcting the peak value position of the second symbol, or else, not correcting the peak value position and outputting directly. The corrected peak value position of the second symbol is as shown in equation (9):

$$Pos = \begin{cases} Pos_2 + N & Peak_2 / Peak_1 > Threshold_3 \\ Pos_2 & Peak_2 / Peak_1 \leq Threshold_3 \end{cases}$$

(9)

Wherein, the third threshold $Threshold_3$ is the threshold of the ratio of the peak value power of the second OFDM symbol to the peak value power of the first OFDM symbol. Ranging signals of different time delays may be analyzed to obtain the ratios of the peak value power of the second OFDM symbol to the peak value power of the first OFDM symbol in various conditions, and a reasonable value is selected thereamong to be the third threshold. It is demonstrated by experimental results that the peak value power of the second OFDM symbol is bigger than the peak value power of the first OFDM symbol if the ranging signal is over than a time length of one OFDM symbol, so the third threshold can be set as a value bigger than 1. In addition, the third threshold can not be set to be too small in order to prevent error detection.

step 209: outputting the final peak value position Pos.

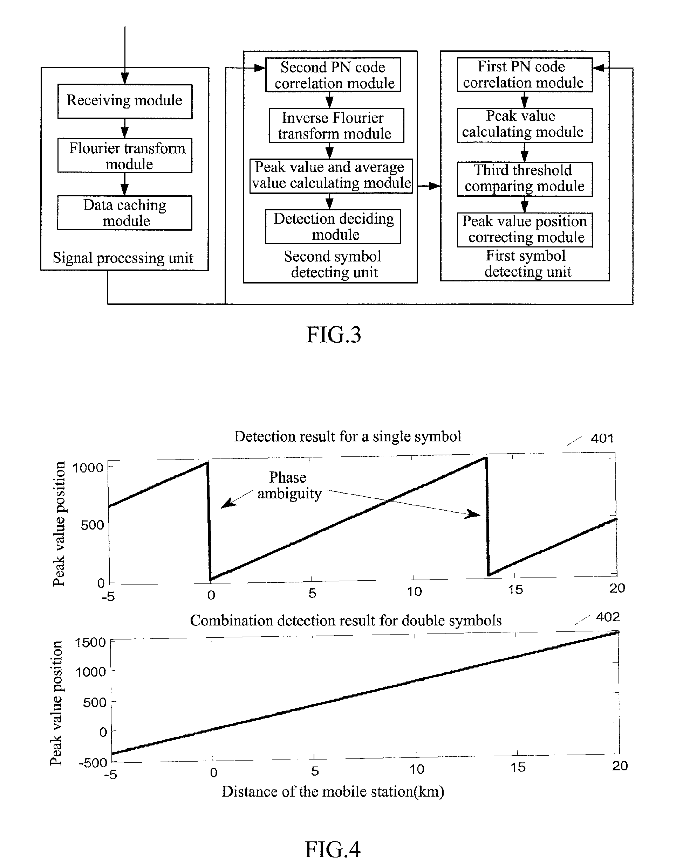

The apparatus described in the embodiment of the invention will be illustrated below in detail with reference to FIG.3.

As show in FIG.3, FIG.3 is a block diagram of the apparatus described in the embodiment of the invention, and the apparatus may comprise: a signal processing unit, a first symbol detecting unit and a second symbol detecting unit; each of which will be respectively illustrated in detail below. Wherein,

the signal processing unit is configured to receive the first OFDM (orthogonal frequency division multiplexing) signal and the second OFDM signal of a mobile station, and performing a fast Fourier transform in a symbol length to obtain the first OFDM symbol carrier sequence and the second OFDM symbol carrier sequence. The signal processing unit comprises specifically: a receiving module, a FFT module and a data caching module; wherein,

the receiving module is configured to receive the first OFDM signal and the second OFDM signal of the mobile station, and eliminate respectively a cyclic prefix of the first OFDM signal and a cyclic prefix of the second OFDM signal to obtain the first OFDM symbol and the second OFDM symbol;

the FFT module is configured to perform respectively a FFT transform on the first OFDM symbol and the second OFDM symbol to obtain the first OFDM symbol carrier sequence $S_1(n)$ and the second OFDM symbol carrier sequence $S_2(n)$, and output the first OFDM symbol carrier sequence $S_1(n)$ and the second OFDM symbol carrier sequence $S_2(n)$ to the data caching module;

the data caching module is configured to cache the first OFDM symbol carrier sequence $S_1(n)$ and the second OFDM symbol carrier sequence $S_2(n)$ to be invoked by the first symbol detecting unit and the second symbol detecting unit.

the second symbol detecting unit is configured to detect whether a ranging symbol is comprised in the second OFDM symbol, if yes, trigger the first symbol detecting unit to perform a calculation on the first OFDM symbol, and eliminate phase ambiguity, or else, end the ranging detection. The second symbol detecting unit comprises specifically: the second PN code correlation module, an inverse Flourier transform module, a peak value and average value calculating module and a detection deciding module; wherein,

the second PN code correlation module is configured to take out the carrier sequence $S_2(n)$ of the second symbol in the data caching module, perform a sequence correlation operation on the carrier sequence $S_2(n)$ of the second symbol with the local PN code of the base station to obtain the second correlated sequence;

the inverse Flourier transform module is configured to perform an IFFT on the second correlated sequence to obtain the sequence $M_2(k)$;

the peak value and average value calculating module is configured to calculate the power of each signal sample point in the sequence $M_2(k)$, and search for the peak value power $Peak_2$ and the peak value position $Pos_2$ of the M2(k), and meanwhile calculate the average power value $Mean_2$ of $M_2(k)$;

the detection deciding module is configured to compare the ratio of the peak value power $Peak_2$ to the average power $Mean_2$ with the first threshold $Threshold_1$, and meanwhile compare the average power with the second threshold $Threshold_2$, if both are greater than the thresholds respectively, then decide that a ranging symbol is comprised in the second OFDM symbol $R_2$, and trigger the first symbol detecting unit to perform a calculation on the first OFDM symbol, or else, the ranging detection fails.

the second symbol detecting unit is configured to perform a calculation on the first OFDM symbol, and eliminate phase ambiguity. The second symbol detecting unit comprises specifically: a first PN code correlation module, a peak value calculating module, a third threshold comparing module and a peak value position correcting module; wherein,

the first PN code correlation module is configured to take out the carrier sequence $S_1(n)$ of the first symbol in the data caching module, and calculate the first correlated sequence between the first OFDM symbol carrier sequence $S_1(n)$ and the local PN code P(n);

the peak value calculating module is configured to calculate the peak value power $Peak_1$ of the first OFDM symbol according to the peak value position $Pos_2$ of the second OFDM symbol and the first correlated sequence $C_1(n)$; the obtaining of the peak value power $Peak_1$ of the first OFDM symbol has two implementing sachems, i.e. the peak value calculating module calculates a phase rotation sequence r(n) according to the peak value position of the second OFDM symbol, and then adjusts the phase of the first correlated sequence $C_1(n)$; then calculates the accumulated value of products of the phase rotation sequence r(n) and the first correlated sequence $C_1(n)$, wherein, the power of the accumulated value is the peak value power $Peak_1$ of the first OFDM symbol; or, the peak value calculating module performs an inverse Flourier transform on the first correlated sequence, and then performs a calculation on the sequence obtained by the inverse Flourier transform and the peak value position $Pos_2$ of the second OFDM symbol to obtain the peak value power $Peak_1$ of the first OFDM symbol. Please refer to the illustration made in the forging method for the details of the two implementing schemes.

The third threshold comparing module is configured to judge whether the ratio of the peak value power $Peak_2$ of the second OFDM symbol to the peak value power $Peak_1$ of the first OFDM symbol is over than the third threshold $Threshold_3$, if yes, decide that the distance from the mobile station to the base station is over than an OFDM symbol time, and trigger the peak value position correcting module, or else, not correct the peak value position.

The peak value position correcting module is configured to, when the ratio of the peak value power $Peak_2$ of the second OFDM symbol to the peak value power $Peak_1$ of the first OFDM symbol is over than the third threshold $Threshold_3$, correct and output the peak value position of the second OFDM symbol, or else, output directly the peak value position of the second OFDM symbol.

The specific implementing process of the apparatus described in the embodiment of the invention will not be repeated since it has been illustrated in detail in the above method.

In conclusion, the embodiments of the invention provides a method and an apparatus for implementing long-distance ranging detection, which eliminate the problem of phase ambiguity at the meantime of implementing the long-distance detection. And, the calculation complexity is reduced since the calculation for the first OFDM symbol is based on the detecting result of the second OFDM symbol, and the response time of the system is improved. FIG.4 is an effect contrast diagram when the method and the apparatus of the invention are used to perform double symbol detection. As shown in FIG.4, it can be seen from the sub-diagram 401: if only a single-symbol detection is performed, then the peak value position will have a phase jump when the distance between the mobile station and the base station is over than an OFDM symbol time; it can be seen from the sub-diagram 402: after the two-symbol detection, the peak value position may indicate accurately the distance of the mobile station.

Obviously, those skilled in the art should understand, the above modules or steps of the invention may be implemented by a general calculating device, and they can be integrated in a single calculating device or distributed in the network constituted by a plurality of calculating devices. Optionally, they can be implemented by executable program codes of the calculating devices so that they can be stored in calculating devices and executed by the calculating devices. Or, they can be made into different integrated circuit modules, or several modules or steps among them can be made into a single integrated circuit module to implement. Thus, the invention is not limited to any specified combination of hardware and software.

What is described above description are just the preferred specific embodiments of the invention, but the protection scope of the invention is not limited thereto. Any variation or replacement that can be easily conceived by those skilled in the art in the technical scope disclosed in the invention should be covered by the protection scope of the invention. Therefore, the protection scope of the invention should be defined by the protection scope of the claims.

**Claims**

1. A method for implementing long-distance ranging detection, wherein, the method comprises:

   step A, a base station receiving two continuous OFDM (orthogonal frequency division multiplexing) signals of a mobile station, eliminating prefixes of the two OFDM signals respectively to obtain a first OFDM symbol and a second OFDM symbol; performing a fast Fourier transform respectively for the first OFDM symbol and the second OFDM symbol to obtain a first OFDM symbol carrier sequence and a second OFDM symbol carrier sequence;

   step B, performing an operation on the second OFDM symbol carrier sequence and detecting whether a ranging symbol is comprised in the second OFDM symbol, if yes, proceeding to step C, or else, ending the ranging detection;

   step C, performing an operation on the first OFDM symbol carrier sequence to eliminate phase ambiguity.

2. The method according to claim 1, wherein, the step B comprises specifically:

   step B1: performing a sequence correlation operation on the second OFDM symbol carrier sequence with a local pseudo-random code (PN code) of the base station to obtain a second correlated sequence, and then performing an inverse fast Fourier transform on the second correlated sequence;

   step B2: performing a calculation for an average power and a peak value power on a sequence after the inverse fast Fourier transform to obtain an average power, a peak value power and a peak value position of the second OFDM symbol;

   step B3: comparing a ratio of the peak value power of the second OFDM symbol to the average power of the second OFDM symbol with a first threshold, and meanwhile comparing the average power of the second OFDM symbol with a second threshold, if both are greater than the thresholds respectively, then deciding that a ranging symbol is comprised in the second OFDM symbol; wherein, the first threshold is a threshold for the ratio of the peak value power of the second OFDM symbol to the average power of the second OFDM symbol, and the second threshold is a threshold for the average power of the second OFDM symbol.

3. The method according to claim 2, wherein, the step B2 comprises specifically:

   for the sequence after the inverse fast Fourier transform, calculating a power of each signal sample point of the sequence, searching powers of a plurality of signal sample points for the peak value power and the peak value position of the second OFDM symbol, and meanwhile averaging the powers of a plurality of signal sample points to obtain the average power.

4. The method according to claim 2 or 3, wherein, the step C comprises:

   step C1: performing a sequence correlation operation on the first OFDM symbol carrier sequence with the local PN code of the base station to obtain a first correlated sequence;

   step C2: performing a calculation according to the peak value position of the second OFDM symbol and the first correlated sequence to obtain a peak value power of the first OFDM symbol;

   step C3: judging whether a ratio of the peak value power of the second OFDM symbol to the peak value power of the first OFDM symbol is over than a third threshold, if yes, deciding that a distance from the mobile station to the base station is over than an OFDM symbol time, correcting the peak value position of the second OFDM symbol and outputting, or else, outputting directly the peak value position of the second OFDM symbol; wherein, the third threshold is a threshold of the ratio of the peak value power of the second OFDM symbol to the peak value power of the first OFDM symbol.

5. The method according to claim 4, wherein, the step C2 comprises specifically:

   calculating a phase rotation sequence according to the peak value position of the second OFDM symbol, and adjusting a phase of the first correlated sequence;

   calculating an accumulated value of products of the phase rotation sequence and the first correlated sequence, wherein, a power of the accumulated value is the peak value power of the first OFDM symbol; or,

   the step C2 comprises specifically:

   performing an inverse Fourier transform on the first correlated sequence, and performing a calculation on the sequence obtained after the inverse Fourier transform and the peak value position of the second OFDM symbol to obtain the peak value power of the first OFDM symbol.

6. An apparatus for implementing long-distance ranging detection, wherein, the apparatus comprises: a signal processing unit, a first symbol detecting unit and a second symbol detecting unit; wherein,

the signal processing unit is configured to receive a first OFDM (orthogonal frequency division multiplexing) signal and a second OFDM signal of a mobile station, and perform a fast Fourier transform in a symbol length to obtain a first OFDM symbol carrier sequence and a second OFDM symbol carrier sequence;

the second symbol detecting unit is configured to perform an operation on the second OFDM symbol carrier sequence and detect whether a ranging symbol is comprised in a second OFDM symbol, if yes, trigger the first symbol detecting unit, or else, end the ranging detection;

the first symbol detecting unit is configured to perform a calculation on a first OFDM symbol to eliminate phase ambiguity.

7. The apparatus according to claim 6, wherein, the signal processing unit comprises specifically: a receiving module, a Flourier transform module and a data caching module; wherein,

the receiving module is configured to receive the first OFDM signal and the second OFDM signal of the mobile station, and eliminate respectively a cyclic prefix of the first OFDM signal and a cyclic prefix of the second OFDM signal to obtain the first OFDM symbol and the second OFDM symbol;

the Flourier transform module is configured to perform respectively a Flourier transform on the first OFDM symbol and the second OFDM symbol to obtain the first OFDM symbol carrier sequence and the second OFDM symbol carrier sequence, and output the first OFDM symbol carrier sequence and the second OFDM symbol carrier sequence to the data caching module;

the data caching module is configured to cache the first OFDM symbol carrier sequence and the second OFDM symbol carrier sequence.

8. The apparatus according to claim 6, wherein, the second symbol detecting unit comprises specifically: a second PN code correlation module, an inverse Flourier transform module, a peak value and average value calculating module and a detection deciding module; wherein,

the second PN code correlation module is configured to perform a sequence correlation operation on the second symbol carrier sequence with a local pseudo-random code (PN code) of the base station to obtain a second correlated sequence;

the inverse Flourier transform module is configured to perform an inverse fast Fourier transform on the second correlated sequence and output;

the peak value and average value calculating module is configured to perform a calculation for an average power and a peak value power on a sequence output by the inverse Flourier transform module to obtain an average power, a peak value power and a peak value position of the second OFDM symbol;

the detection deciding module is configured to compare a ratio of the peak value power of the second OFDM symbol to the average power of the second OFDM symbol with a first threshold, and meanwhile compare the average power of the second OFDM symbol with a second threshold, if both are greater than the thresholds respectively, then decide that a ranging symbol is comprised in the second OFDM symbol, and trigger the first symbol detecting unit, or else, end the ranging detection; wherein, the first threshold is a threshold for the ratio of the peak value power of the second OFDM symbol to the average power of the second OFDM symbol, and the second threshold is a threshold for the average power of the second OFDM symbol.

9. The apparatus according to claim 8, wherein, the first symbol detecting unit comprises specifically: a first PN code correlation module, a peak value calculating module, a third threshold comparing module and a peak value position correcting module; wherein,

the first PN code correlation module is configured to perform a sequence correlation operation on the second symbol carrier sequence with a local PN code of the base station to obtain a first correlated sequence;

the peak value calculating module is configured to perform a calculation according to the peak value position of the second OFDM symbol and the first correlated sequence to obtain a peak value power of the first OFDM symbol;

the third threshold comparing module is configured to judge whether a ratio of the peak value power of the second OFDM symbol to the peak value power of the first OFDM symbol is over than a third threshold, if yes, decide that a distance from the mobile station to the base station is over than an OFDM symbol time, and trigger the peak value position correcting module to perform a peak value correction, or else trigger the peak value position correcting module to output directly; wherein, the third threshold is a threshold of the ratio of the peak value power of the second OFDM symbol to the peak value power of the first OFDM symbol;

the peak value position correcting module is configured to correct and output the peak value position of the second OFDM symbol, or output directly the peak value position of the second OFDM symbol.

**10.** The apparatus according to claim 9, wherein, the peak value calculating module is specifically configured to calculate a phase rotation sequence according to the peak value position of the second OFDM symbol, and adjust a phase of the first correlated sequence; and then calculate an accumulated value of products of the phase rotation sequence and the first correlated sequence, wherein, a power of the accumulated value is the peak value power of the first OFDM symbol;

or, the peak value calculating module is specifically configured to perform an inverse Fourier transform on the first correlated sequence, and perform a calculation on the sequence obtained after the inverse Fourier transform and the peak value position of the second OFDM symbol to obtain the peak value power of the first OFDM symbol.

Signal duplication          Signal duplication

| CP | Symbol 101 | Symbol 102 | GRD |

←——The first ranging symbol——→←——The second ranging symbol——→

## FIG.1

201 — ⟨Receiving OFDM signals⟩

202 — Obtaining the first OFDM symbol carrier sequence and the second OFDM symbol carrier sequence

203 — Performing a sequence correlation operation on the second OFDM symbol carrier sequence with a local PN code

204 — Calculating the peak value power and the average value of the second OFDM symbol

205 —
Double-threshold comparison

Is the ranging signal comprised — Yes

No

Ranging detection fails

206 — Performing a sequence correlation operation on the first OFDM symbol carrier sequence with the local PN code

207 — Calculating the peak value power of the first OFDM symbol

208 —
Third threshold comparison

Whether belonging to long-distance access — No / Yes

Correcting the peak value position

Outputting the ranging detection result

End

## FIG.2

```
┌─────────────────────────┐   ┌──────────────────────────┐   ┌──────────────────────────┐
│                         │   │   Second PN code         │   │   First PN code          │
│   ┌─────────────────┐   │   │   correlation module     │   │   correlation module     │
│   │ Receiving module│   │   └──────────────────────────┘   └──────────────────────────┘
│   └─────────────────┘   │            │                              │
│          │              │   ┌──────────────────────────┐   ┌──────────────────────────┐
│   ┌─────────────────┐   │   │   Inverse Flourier       │   │   Peak value             │
│   │ Flourier transform  │   │   transform module       │   │   calculating module     │
│   │ module          │   │   └──────────────────────────┘   └──────────────────────────┘
│   └─────────────────┘   │            │                              │
│          │              │   ┌──────────────────────────┐   ┌──────────────────────────┐
│   ┌─────────────────┐   │   │   Peak value and average │   │   Third threshold        │
│   │ Data caching    │   │   │   value calculating module│  │   comparing module       │
│   │ module          │   │   └──────────────────────────┘   └──────────────────────────┘
│   └─────────────────┘   │            │                              │
│                         │   ┌──────────────────────────┐   ┌──────────────────────────┐
│  Signal processing unit │   │   Detection deciding     │   │   Peak value position    │
│                         │   │   module                 │   │   correcting module      │
└─────────────────────────┘   └──────────────────────────┘   └──────────────────────────┘
                               Second symbol                  First symbol
                               detecting unit                 detecting unit
```

FIG.3

Detection result for a single symbol    ⟋ 401

Phase
ambiguity

Peak value position

Combination detection result for double symbols    ⟋ 402

Peak value position

Distance of the mobile station(km)

FIG.4

# INTERNATIONAL SEARCH REPORT

| | International application No. |
|---|---|
| | PCT/CN2010/073302 |

**A. CLASSIFICATION OF SUBJECT MATTER**

H04L7/00 (2006.01) i

According to International Patent Classification (IPC) or to both national classification and IPC

**B. FIELDS SEARCHED**

Minimum documentation searched (classification system followed by classification symbols)

IPC:H04Q;H04L;H04M;G06F;H04W

Documentation searched other than minimum documentation to the extent that such documents are included in the fields searched

Electronic data base consulted during the international search (name of data base and, where practicable, search terms used)

WPI;EPODOC;CNKI;CNPAT;IEEE;GOOGLE: ranging, OFDM, orthogonal frequency division multiplexing, two, second, symbol?, carrier?, FFT, fast Fourier Transform, prefix??, phase, timing, consecutive??, power, peak, average

**C. DOCUMENTS CONSIDERED TO BE RELEVANT**

| Category* | Citation of document, with indication, where appropriate, of the relevant passages | Relevant to claim |
|---|---|---|
| A | CN 101217818 A (BEIJING BEIFANG FENGHUO TECHNOLOGY CO., LTD.) 09 Jul. 2008(09.07.2008) the whole document | 1-10 |
| A | CN 101136881 A (SHIYIFA BEIJING SEMICONDUCTOR R & D CO., LTD.) 05 Mar. 2008(05.03.2008) the whole document | 1-10 |
| A | CN 101193398 A (ZHEJIANG UNIVERSITY et al.) 04 Jun. 2008(04.06.2008) the whole document | 1-10 |
| A | CN 101217291 A (ZTE CORP.) 09 Jul. 2008(09.07.2008) the whole document | 1-10 |
| A | US 20070133697 A1 (Spock et al.) 14 Jun. 2007(14.06.2007) the whole document | 1-10 |
| A | EP 1883175 A1 (SAMSUNG ELECTRONICS CO., LTD.) 30 Jan. 2008(30.01.2008) the whole document | 1-10 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim (S) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&"document member of the same patent family |

| Date of the actual completion of the international search | Date of mailing of the international search report |
|---|---|
| 14 Jun. 2010(14.06.2010) | **26 Aug. 2010 (26.08.2010)** |

| Name and mailing address of the ISA/CN<br>The State Intellectual Property Office, the P.R.China<br>6 Xitucheng Rd., Jimen Bridge, Haidian District, Beijing, China<br>100088<br>Facsimile No. 86-10-62019451 | Authorized officer<br><br>YI,Shuiying<br><br>Telephone No. (86-10)62413381 |
|---|---|

Form PCT/ISA /210 (second sheet) (July 2009)

## INTERNATIONAL SEARCH REPORT
### Information on patent family members

International application No.

PCT/CN2010/073302

| Patent Documents referred in the Report | Publication Date | Patent Family | Publication Date |
|---|---|---|---|
| CN 101217818 A | 09.07.2008 | None | |
| CN 101136881 A | 05.03.2008 | EP 1895734 A2 | 05.03.2008 |
| | | US 2008056116 A1 | 06.03.2008 |
| CN 101193398 A | 04.06.2008 | None | |
| CN 101217291 A | 09.07.2008 | None | |
| US 2007133697 A1 | 14.06.2007 | WO 2007070605 A2 | 21.06.2007 |
| | | CN 101411108 A | 15.04.2009 |
| | | TW 200742381 A | 01.11.2007 |
| EP 1883175 A1 | 30.01.2008 | DE 602005016611 E | 22.10.2009 |

Form PCT/ISA /210 (patent family annex) (July 2009)